# EUROPEAN PATENT SPECIFICATION

(11) **EP 0 168 019 B1**
(45) Date of publication and mention of the grant of the patent: **29.09.1993**
(21) Application number: 85108457.4
(22) Date of filing: 08.07.1985
(51) Int. Cl.: G06F 15/46, G06F 11/20, F22B 35/18, F01K 13/02, F02G 1/06

(54) **Controller for heat power plant**
Regler für ein Wärmekraftwerk
Régulateur pour une usine thermo-électrique

(30) Priority: 09.07.1984 JP 140533/84; 20.07.1984 JP 149526/84
(43) Date of publication of application: 15.01.1986
(73) Proprietor: HITACHI, LTD., Chiyoda-ku, Tokyo 100 (JP)
(72) Inventor: Yamada, Hiroshi, Hitachi-shi (JP); Iioka, Michihiro, Katsuta-shi (JP); Sugano, Akira, Katsuta-shi (JP); Takita, Atsushi, Mito-shi (JP); Nigawara, Seiitsu, Hitachi-shi (JP); Fukai, Masayuki, Hitachi-shi (JP)
(74) Representative: Strehl Schübel-Hopf Groening & Partner

(56) References cited:
- US-A- 4 347 564
- US-A- 4 455 614
- ADVANCES IN INSTRUMENTATION, vol. 38, Part 2, October 1983, pages 1275-1284, Research Triangel Park, North Carolina, US; H. KAMIMURA et al.: "Development of the fault tolerant distributed control system"
- ADVANCES IN INSTRUMENTATION, vol. 38, Part 2, October 1983, pages 1285-1291, Research Triangel Park, North Carolina, US; F. OJIMA et al.: "Back-up system of distributed DDC with split architecture"
- ADVANCES IN INSTRUMENTATION, vol. 35, Part 1, 1980, pages 293-302, Research Triangel Park, North Carolina, US; G.R. ROSSMANN "Combustion control security efficiency using distributed microprocessor technology"
- IBM TECHNICAL DISCLOSURE BULLETIN, vol. 22, no. 3, August 1979, pages 1131, 1132; R.P. CHRISFIELD et al.: "Distributed power/thermal control"

## Description

### BACKGROUND OF THE INVENTION

The present invention relates to a controller for a heat power plant, and more particularly to a controller for a heat power plant which can minimize the affect to the heat power plant when a trouble occurs in the controller.

A heat power plant must be operated with high reliability. To this end, plant equipments as well as a plant controller are designed for high reliability and the controller is designed to prevent stop of the plant even if the controller stops by failure. For example, in U.S.P. 4,347,564, the controller is partially duplicated so that a host computer is used when a master controller fails. In IBM Technical Disclosure Bulletin, Vol. 22, No 3, Aug. 1979, p. 1131 and 1132 a control system is described in which a central maintenance processor is able to directly control the functions of a local station in case of a failure of the local control station. The local control station on the other hand is able to monitor and protect the system, when the central maintenance processor fails. In Japanese unexamined patent publication No. 50-143,989, a so-called one-to-n backup system is used in which a backup sub-loop controller which is normally not used is started when a normal sub-loop controller fails. In such multiple systems, even if a trouble occurs in one controller, the heat power plant can continue the operation and the highly reliable controller is provided. However, since the multiple system needs at least one redundant controller of the same function, the cost increases.

### SUMMARY OF THE INVENTION

It is an object of the present invention to provide a controller for a heat power plant which can minimize the effect to the plant operation by a failure of the controller with a minimum redundancy of the controller. This object is solved by the invention as characterised in claim 1.

In accordance with the present invention, the controller comprises at least one master controller for receiving a load demand and a plurality of plant data from a heat power plant and outputting command signals on at least two of an electric power, a feed water flow rate, a fuel flow rate, an air flow rate and a recirculation gas flow rate of the plant required to achieve the load demand, a plurality of sub-loop controllers independently provided one for each of the command signals for providing control quantities to control respective control terminals in accordance with the command signals, a transmission loop arranged between the sub-loop controllers and the master controller, drive means provided one for each of the control quantities supplied from the sub-loop controllers for driving the control terminals, an I/O bus arranged between one of the sub-controllers and the drive means to be driven by the command signal for the one sub-loop controller, and detection means for detecting plant data to be delivered to the master controller or the sub-loop controllers.

### BRIEF DESCRIPTION OF THE DRAWINGS

Fig. 1 illustrates a process configuration in a water-steam process,
Fig. 2 illustrates a sub-process configuration in the water-steam process,
Fig. 3 illustrates a micro-process configuration in a feed water sub-process,

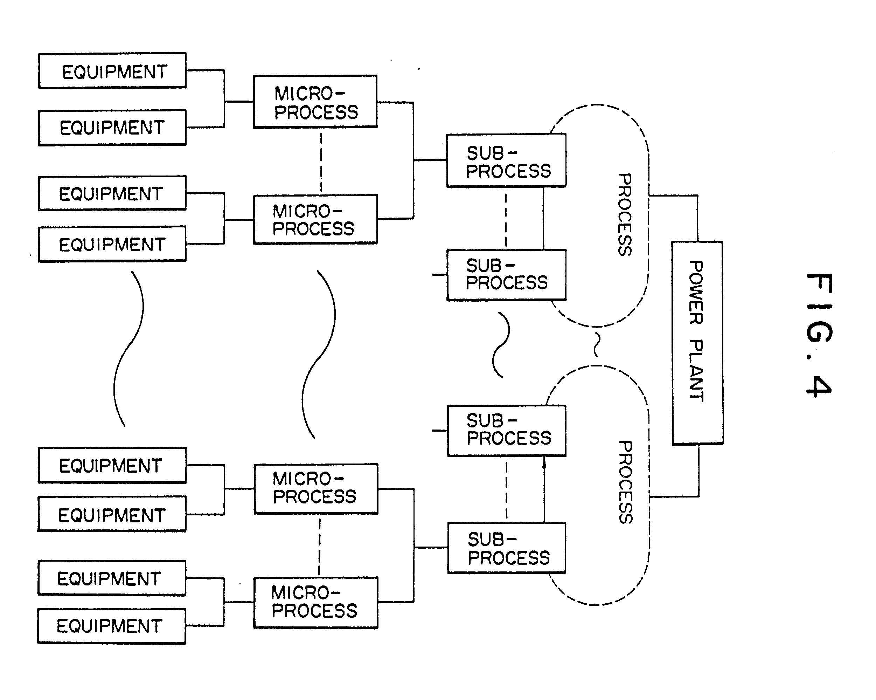

Fig. 4 shows a heat power plant process and a configuration of equipments,
Fig. 5 shows a prior art process and an arrangement of a controller,
Fig. 6 shows a basic concept of an arrangement of a controller in the present embodiment,
Fig. 7 control system configurations in accordance with the present invention, in which Fig. 7A shows a drum type and Fig. 7B shows a one through type,
Fig. 8 shows a bardware configuration of the present controller,
Fig. 9 shows a basic system configuration including SLC, DCM and SGC in the present invention,
Fig. 10 is a functional diagram of SGC,
Fig. 11 is a functional diagram of an analog control DCM,
Fig. 12 shows a functional diagram of a digital control DCM,
Figs. 13 - 15 show a backup method when the controller of the present invention fails,
Figs. 16 - 18 show embodiments of the present invention applied to a feed water system, and
Figs. 19 and 20 show process signals required to back up a higher level controller by a lower level controller when the higher level controller fails.

### DESCRIPTION OF THE PREFERRED EMBODIMENTS

A basic concept of construction of a heat power plant and construction of a controller for the heat power plant is first explained.

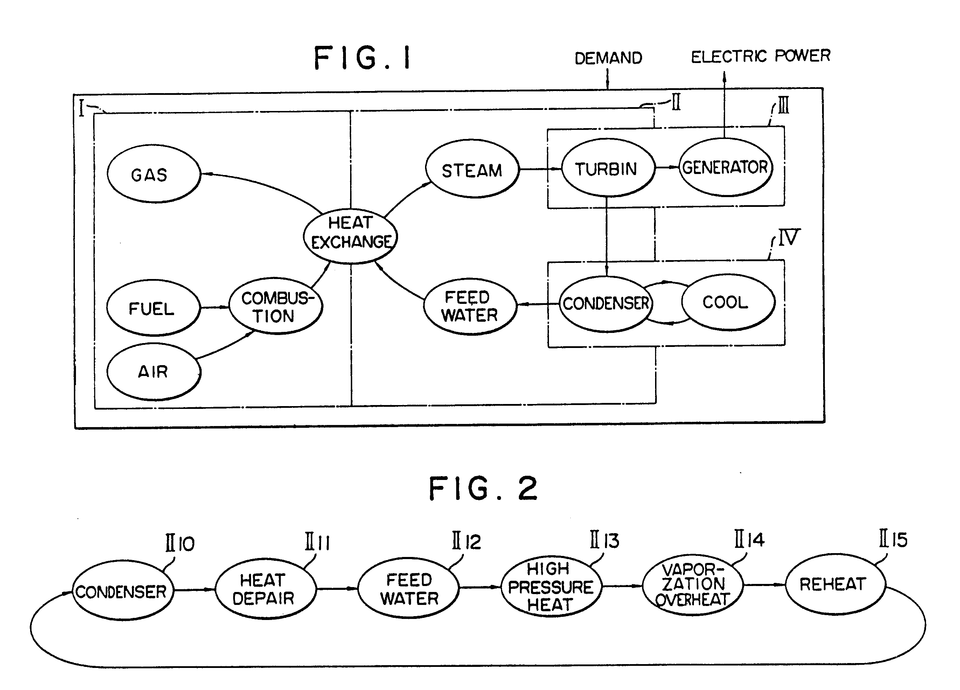

Fig. 1 illustrates a concept of division of control system in accordance with a plant characteristic of the heat power plant.

The heat power plant is an aggregation of complex processes in which various functions are related to each other in a complex manner. When it is classified by material and energy flow, it comprises four processes, combustion process I, water-steam process II, power generation process III and cooling process IV, as shown in Fig. 1. The control of the heat power plant is to combine and coodinate those four processes so that a power is stably supplied to an external power demand. Each of the processes shown in Fig. 1 can be further classified by sub-process in accordance with functions. Fig. 2 shows sub-processes of the water-steam process II. II 10 is a condensing subprocess, II 11 is a low pressure feed water and heating and deairing sub-process II 12 is a feed water sub-process, II 13 is a high pressure feed water and heating sub-process, II 14 is a vaporization and overheat sub-process, and II 15 is a reheat sub-process. Each sub-process has a plurality of micro-processes of the same capacity as required to enhance a resistance of the plant. Each micro-process may be further sub-divided by equipment.

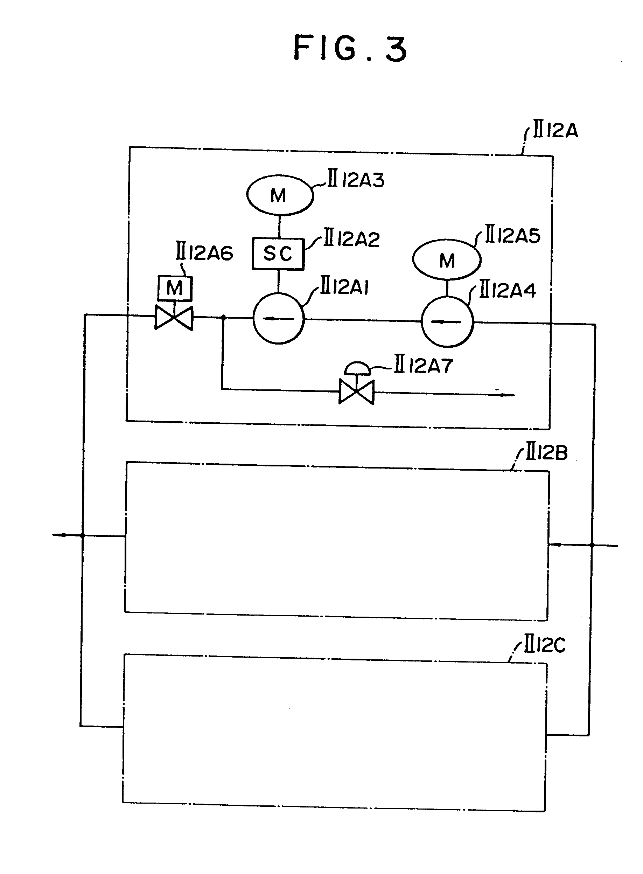

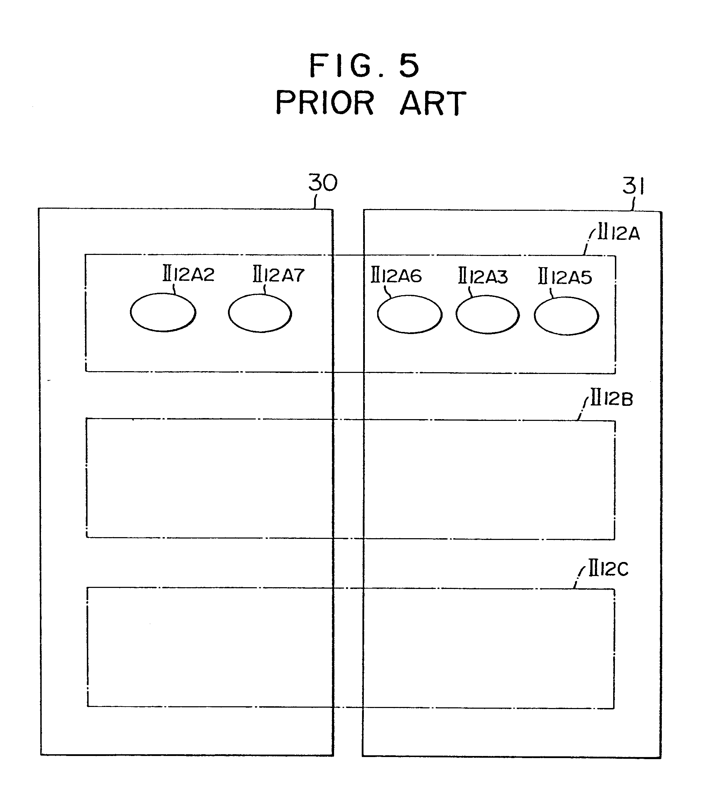

Fig. 3 shows the feed water sub-process II 12 sub-divided by the micro-process and the equipment. II 12A - II 12C are feed water feed water pump micro-processes. The equipments in the micro-process are feed water pump II 12A1, feed water pump speed controller, feed water pump motor II 12A3, feed water booster pump II 12A4, feed water booster pump motor II 12A5, feed water pump exit value II 12A6 and feed water pump recirculation value II 12A7. In summary, the power generation plant configuration can be divided to the levels of process, sub-process, micro-process and equipment. If a trouble occurs in the process level or sub-process level of the plant, the continuation of the operation of the plant is, in marry cases, not allowed and the plant operation is stopped. However, if a trouble occurs in the micro-process level or the equipment level, the continuation of the operation may be allowed with a reduced plant output. In the past, however, the plant analysis was not sufficiently made and the result thereof was not reflected to the controller configuration. In a feed water process shown in Fig. 5, a feed water flow rate controller 30 for an analog controller and a feed water control sequencer 31 for an ON-OFF controller are arranged across a plurality of micro-processes II 12A - II 12C. A trouble in the controller 30 or 31 disables the continuation of automatic operation of the micro-processes II 12A - II 12C. This means that the continuation of automatic operation of all of the micro-processes in the feed water sub-process 12 is not allowed, and it imparts a serious problem to the continuation of the plant operation. In the present invention, the plant is divided in accordance with the plant characteristic, and DCM's (drive control modules) and SGC's (signal conditioning modules) are arranged as lowest level controllers for the equipments, sub-loop controllers are arranged as a higher level controllers to the micro-processes, a master controller is arranged as a higher level controller to the process and the sub-processes in order to cooperatively control the process and the sub-processes, and a supervising controller is provided at the highest level. Those controllers are constructed in a simplex system.

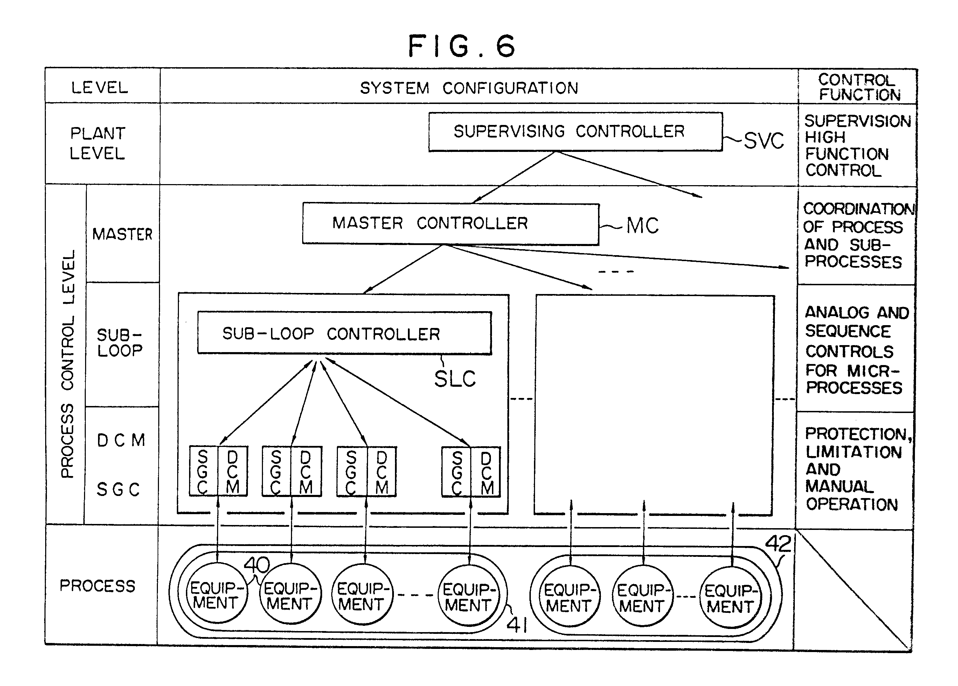

Fig. 6 shows a basic concept of the above system. Numeral 40 denotes the equipment, and numeral 42 denotes the sub-process. The SGC processes data inputs from the process. The DCM controls the equipment 40 by a control signal or a manual command for each equipment. The SGC and DCM are smallest units in the system and effect manual operations, and protection and limitation of the equipment. SLC denotes a sub-loop controller arranged for each microprocess which includes the DCM and the SGC to effect analog control and sequence control. MC denotes a master controller which controls a plurality of sub-loop controllers SLC and coordinates the process and the sub-processes. SVC denotes a supervising controller which effects high function controls such as overall plant supervision, non-machine interface, data logging, document formation, down-loading of a control program, correction of programs and prediction control.

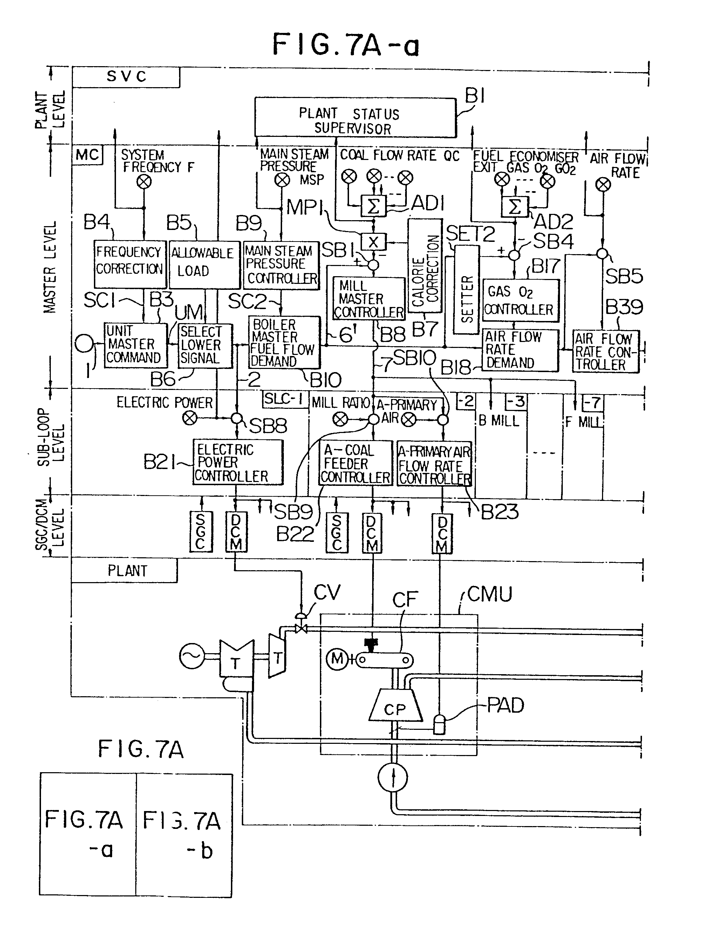

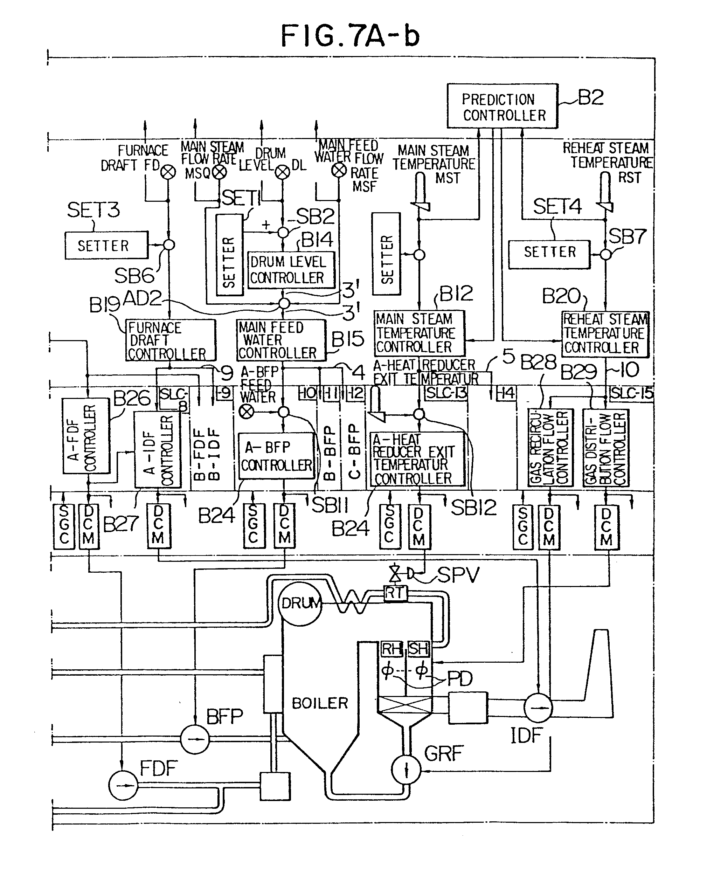

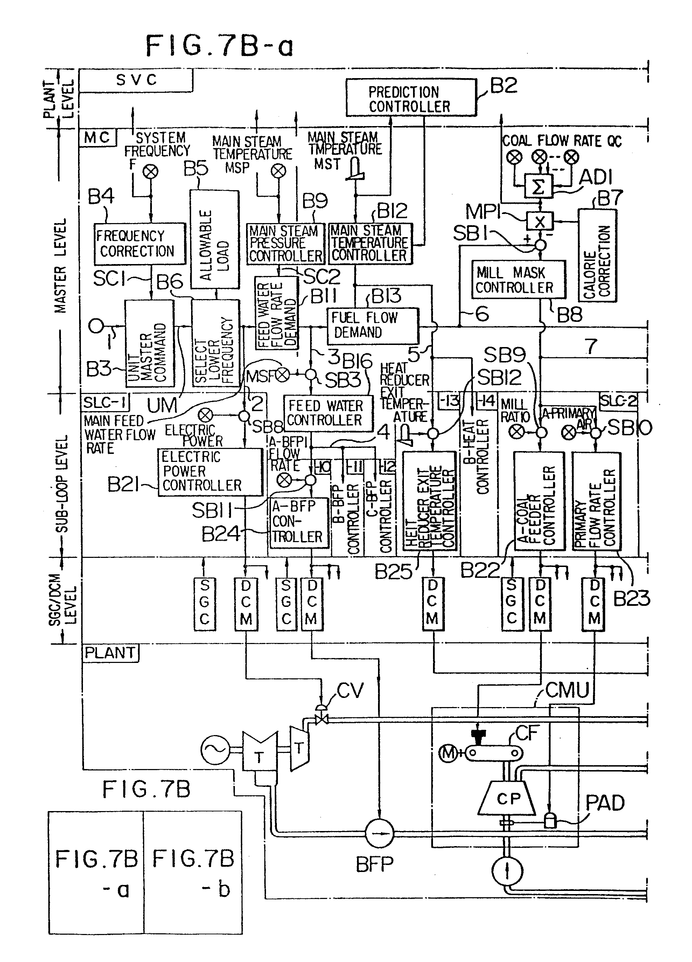

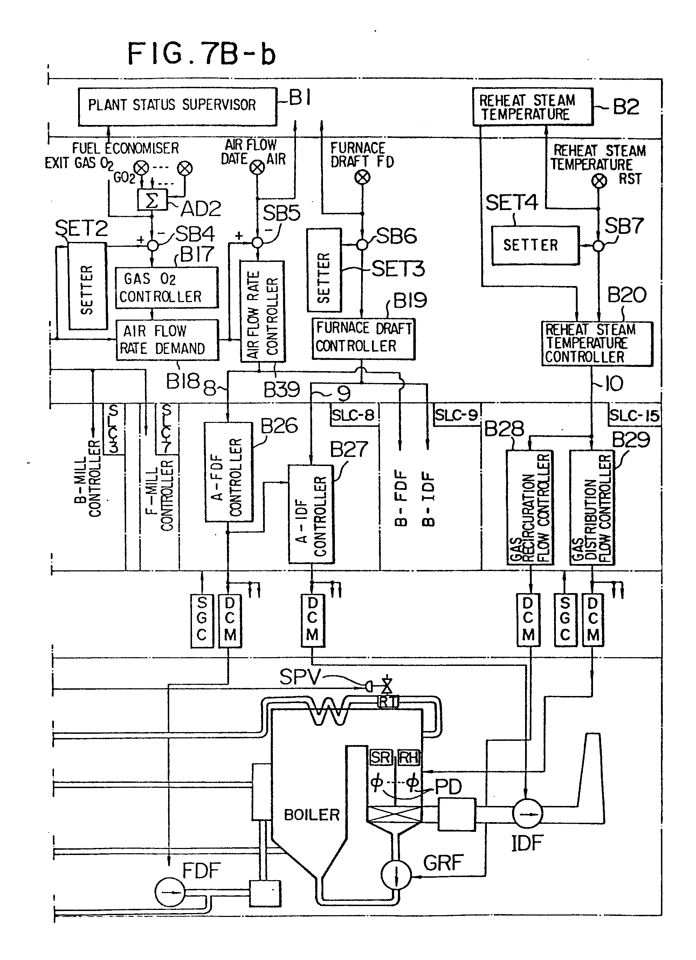

Fig. 7A shows a control system configuration for a drum type boiler power plant in accordance with the above concept, and Fig. 7B shows a control system configuration for a one-through type boiler power plant. The controller comprises a supervising controller SVC, a master controller MC and fifteen sub-loop controllers SLC. In the drum type boiler of Fig. 7A, the master controller MC receives a system frequency F, a main steam pressure MSP, fuel economizer exit gas O₂, GO₂, an air flow rate AIR, a furnace draft FD, a drum water level DL, a main steam temperature MST, a reheat steam temperature RST, a fuel flow rate or coal flow rate QC, a main steam flow rate MSQ and a main feed water flow rate MSF to control the process and the sub-processes while coordinating them. In the one-through type boiler, the heat power plant is not equipped with a drum and does not control the feed water by the three elements, main steam flow rate MSQ, drum level DL and main feed water flow rate MSF. Therefore, the master controller MC of Fig. 7B does not essentially need the drum level DL. In the master controller MC for the one-through type boiler of Fig. 7B, the air flow rates AIR and the main steam flow rate MSQ are also not received. The input data to the master controller MC are monitored by a plant status supervisor B1 of the supervising controller SVC. In order to exactly control the boiler, it is preferable to predict the future values of the main steam temperature MST, and the reheat steam temperature RST and control them. Accordingly, MST and RST are appropriately predicted by a prediction controller B2 of the SVC. The master controller MC further receives a load demand 1 from a central power supply command station and sends the demand to the sub-loop controllers SLC. Relations between the demand and the SLC which receives the demand are shown below.
- SLC 1:: electric power demand 2
- SLC 2-7:: coal mill master demand 7
- SLC 8, 9:: air flow demand 8 furnace draft demand 9
- SLC 10-12:: feed water flow demand 4
- SLC 13, 14:: main steam temperature demand 5
- SLC 15:: reheat stream temperature demand 10
The master controller MC prepares the above demands in the following manner.

### Electric power demand 2

It is common to the drum type boiler and the one-through type boiler. A frequency correction unit B4 generates a correction signal SC 1, and a unit master instruction unit B3 corrects the central load demand 1 by SC 1 to produce a unit master demand UM. In a unit B5, a maximum allowable load for continuous operation by spare machines when some of them tripped is set. A unit B6 selects a smaller one of the outputs of B3 and B5 and sets it as the electric power demand.

### Coal mill master demand 7

An adder AD1 calculates a total coal flow and an output of AD1 is multiplied by an output of a heat correction unit B7 which is determined in accordance with a type of coal, in a multiplier MP1, which produces an actual total fuel flow. A substractor SB1 calculates a difference from a target 6 or 6', and a mill master controller B8 determines a mill master demand in accordance with the difference. A signal 7 indicates a total coal flow required to meet the load demand 1. The total fuel demands 6 and 6' are determined in different manners depending on the type of boiler. For the drum type boiler (Fig. 7A), it is corrected by the main stream pressure for the electric power demand 2. A signal SC2 for keeping the main stream pressure constant is obtained in a unit B9, and the demand 2 is corrected by the signal SC2 in a boiler master unit B10, which produces the fuel demand 6'. For the one-through type boiler (Fig. 7B), a feed water flow demand unit B11 corrects the demand 2 by the signal SC2 to produce the total feed water demand 3. A fuel flow demand unit B13 corrects the feed water demand 3 by a main steam temperature demand 5 supplied by a control unit B12 which maintains the main stream temperature constant, to produce the fuel flow demand 6.

### Feed water flow demand 4

For the drum type boiler of Fig. 7A, the feed water flow demand 4 to be supplied to the respective boiler feed water pumps BFP is produced by the so-called three-element control. A subtractor SB2 calculates a difference between a target water level preset by a setter SET 1 and an actual water level, and a drum level control unit B14 produces a drum level control signal 3'. The drum level control may be effected by a signal 3'' but because of a poor control response, the difference between the main steam flow MSQ and the main feed water flow MSF is added to the control signal 3'' in an adder AD2 to produce the control signal 3'. A main feed water control unit B15 produces the feed water demand 4 for the BFP by the control signal 3'. In the one-through type boiler of Fig. 7B, the total feed water flow demand 3 is determined in accordance with the load demand and it is compared with the actual total feed water flow in the subtractor SB3 and a feed water control unit B16 determines the feed water demand 4 for the BFP in accordancd with the difference.

### Air flow demand 8

Basically, the air flow demand 8 is obtained by correcting the fuel flow demand 6' or 6 determined by the unit B10 of Fig. 7A or the unit B13 of Fig. 7B by the quantity of O₂ in the combustion gas. The quantity of O₂ in the gas at the exit of the fuel economiser is calculated by the adder AD2, and a difference from the O₂ target preset by the setter SET 2 is calculated by a substrator SB 4. A unit 17 is a controller to keep O₂ in the gas constant and an air flow demand operation unit B18 corrects the fuel flow demand 6 with the output of the control unit 17. A subtractor SB 5 calculates a difference between the output of the unit B18 and the actual air flow and a unit B19 corrects the output of the unit B18 by the output of the subtractor SB 5 to produce the air flow demand 8.

### Main steam temperature demand 5

A unit B12 proportional-integrates the main steam temperature error to produce the main steam temperature demand 5.

### Furnace draft demand 9

A subtractor SB 6 calculates a difference between an output of a setter SET 3 and the furnace draft and a control unit B19 proportional-integrates the difference to produce the furnace draft demand 9.

### Reheat steam temperature demand 10

A subtractor SB 7 calculates a difference between an output of a setter SET 4 and the reheat stream temperature, and a control unit B20 proportional-integrates the difference to produce the demand 10.

The master controller MC is constructed as shown in Fig. 7A or 7B depending on the type of boiler and sends the above demand signals to the sub-loop controllers SLC. In the SLC, SB 8 - SB 12 denote subtractors which calculate differences between the demands from the master controller MC and the detected process status, and B21 - B25 denote control functions such as proportional integration, and specifically controllers for electric power, coal feeder, primary air flow, BFP and steam temperature at an exit of a heat dissipator. Thus, SLC 1 - 7 and 10 - 14 constitute the feedback control. SLC 8, 9 and 15 constitute an open loop control, and B26 - B29 are equipped with function generators for controlling FDF, IDF, gas recirculation and gas distribution flow.

On the other hand, the DCM sends the control signal from the sub-loop controller SLC to the control terminal and, in the manual operation mode, switches the output of the sub-loop controller to produce the manual control command.

The bottom stages in Figs. 7A and 7B show schematic diagrams of known heat power plants. Relations between the outputs of the SLC and the portions of the plant controlled thereby through the DCM are explained below.
- SLC 1:: A steam control valve CV at an entry of a turbine T. Since four to eight CV's are usually arranged, the DCM's are arranged one for each CV.
- SLC 2-7:: A coal boiler is shown. A feed speed (fuel flow rate) of a coal feeder CF which feeds coal to a coal pulverizer CP, and an opening of a damper PAD for controlling a primary air flow to feed the pulverized coal to the boiler. A plurality of coal pulverizer units CMU comprising CF, CP and PAD are usually arranged and each unit is controlled by one SLC. In the illustrated embodiment, six SLC's and six CMU's are provided.
- SLC 8, 9:: A forced draft fan FDF for controlling air flow to the boiler, and an induced draft fan for controlling gas flow from the boiler. Two FDF's and two IDF's are provided in parallel and one set of FDF and IDF is controlled by the SLC 8 while the other set is controlled by the SLC 9.
- SLC 10, 12:: A boiler feed pump BFP for controlling the feed water flow to the boiler, a plurality of (three in the illustrated embodiment) BFP's are arranged. An A-BFP is controlled by the SLC 10, a B-BFP is controlled by the SLC 11 and a C-BFP is controlled by the SLC 12.
- SLC 13, 14:: An opening of a spary valve SPV of a heat reducer RT for cooling the steam generated by the boiler. Two heat reduces are provided and one is controlled by the SLC 13 while the other is controlled by the SLC 14.
- SLC 15:: A gas recirculation fan GRF for reintroducing a combustion gas into the boiler to reduce NOX (nitrogen-oxide mixture), and a parallel damper PD which separately introduces a reheater RH and a primary super heater SH to a flue to control gas flows.

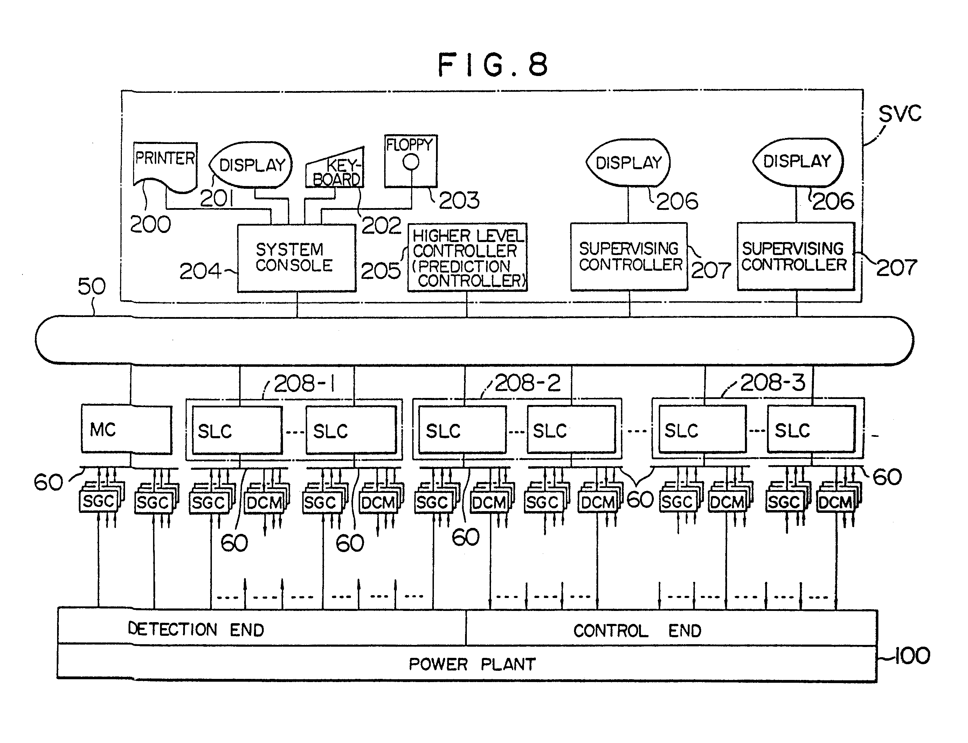

The system configuration was shown in Fig. 7 to illustrate the division of the control function. An actual hardware configuration is shown in Fig. 8. The like numerals to those used in Fig. 1 are shown. Numeral 50 denotes a serial data transmission loop which functionally couples a plurality of distributed sub-loop controllers SLC, the master controller MC and the supervising controller SVC.

Numeral 200 in SVC denotes a printer, numerals 201 and 206 denote displays, numeral 202 denotes a keyboard, numeral 203 denotes a floppy, numeral 204 denotes a system console, numeral 205 denotes a higher level controller used for prediction control, numeral 207 denotes the supervising controller and numeral 208 denotes SLC's. In the embodiment of Fig. 7, numeral 208-1 denotes feed water controlling SLC's (SLC 10 - 12 in Fig. 7), numeral 208-2 denotes mill controlling SLC's (SLC 2 - 7 in Fig. 7) and numeral 208-3 denotes air flow rate controlling SLC's (SLC 8, 9 in Fig 7). Each SLC has a plurality of SGC's and DCM's and the SLC and the SGC's and DCM's are coupled through an I/O bus 60. The master controller MC has no DCM and a plurality of SGC are coupled through the bus 60. The signal conditioning module SGC detects the status of the power plant 100 such as the detector outputs shown in Fig. 7 and sends them to the SLC and the MC. The drive control module DCM drives the equipments in the power plant 100 in accordance with the output from the SLC. The controllers of the present invention are of hierachy configuration as shown in Fig. 8, and each sub-loop controller SLC receives the target value from the MC and provides the control quantities of the equipment

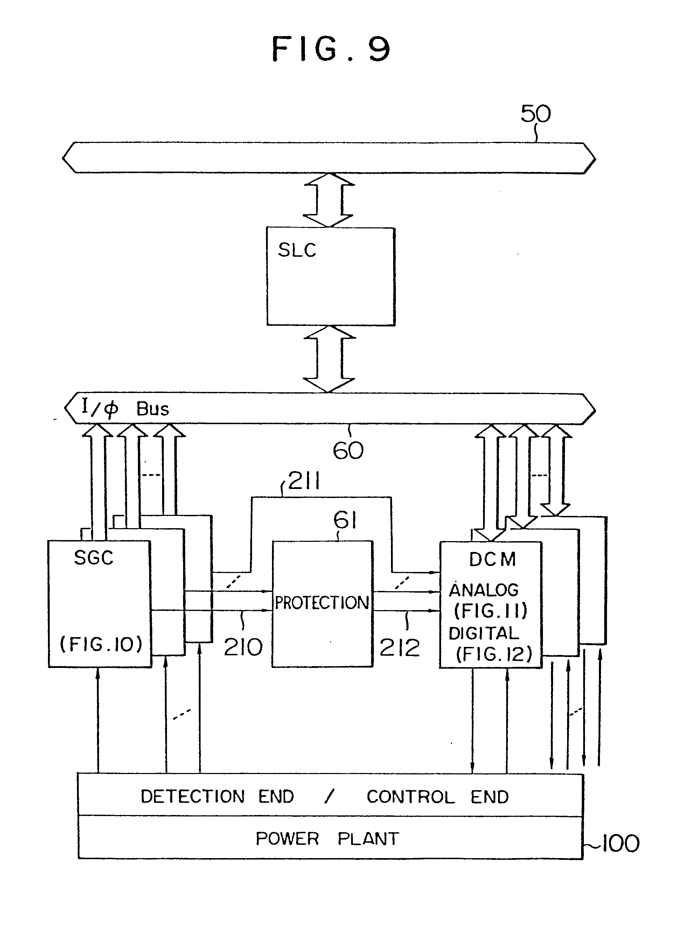

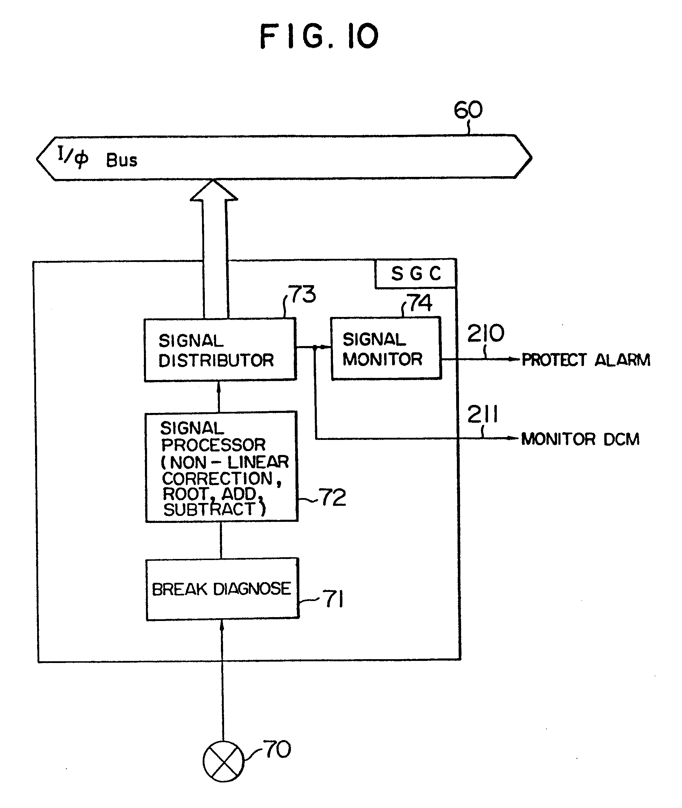

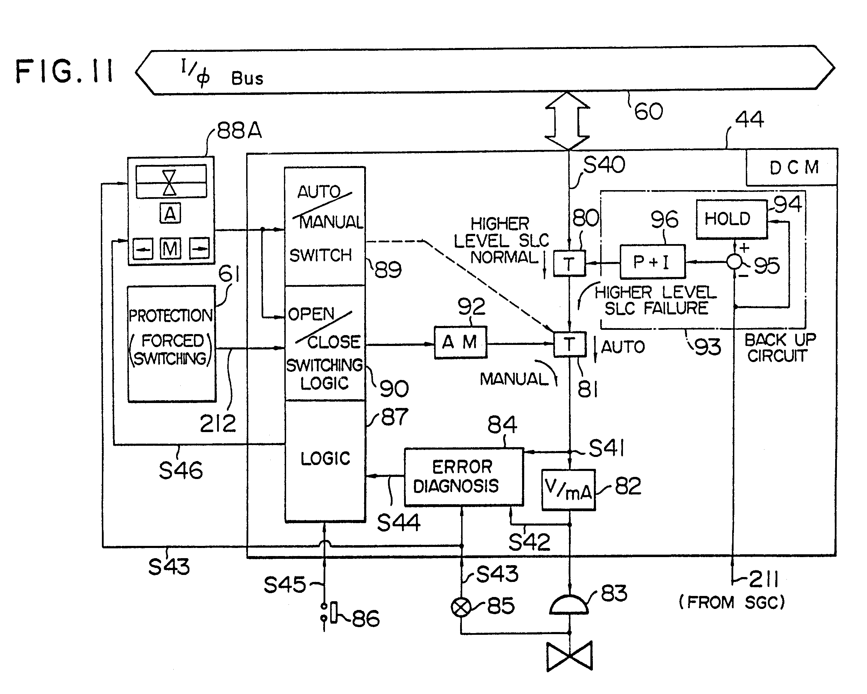

Fig. 9 shows one of the SLC's and the SGC's and DCM's coupled thereto. Numeral 50 denotes the serial data transmission loop which couples the sub-loop controller SLC to other controllers MC and SLC's. Numeral 60 denotes the I/O bus which couples the sub-loop controller SLC to the SGC's and DCM's. The sub-loop controller SLC is a processor comprising a CPU and a memory, and the SGC and the DCM are I/O devices.

The function of SGC is explained with reference to Fig. 10. The SGC is basically provided one for each detector and detects a break of wiring by a block 71 for a signal from a detection end 70. The break can be detected by an abrupt change of an input signal. A block 72 makes non-linear correction, rooting, addition and substraction as required. It compensates for a non-linear characteristic of a value opening signal, calculates a difference between two input pressure signals and a root of the difference to produce a signal representing a flow rate, and multiplies to signal by a predetermined gain. A block 73 converts the signal to a digital signal and distributes it to the higher level controller such as the sub-loop controller SLC through the I/O bus 60, and to a meter and the DCM without routing the I/O bus 60. For example, it sends the process signal to the meter and the DCM through a signal line 211 without routing the I/O bus 60 to monitor and control the process signal. It also monitors the process signal by a block 74 to detect a failure in the higher order controller and produce alarming and protecting contact outputs through the signal line 210 to the monitor and protection function 61.

Referring to Fig. 11, the function of the analog controlling DCM is explained. The DCM is basically provided one for each control end. A demand S40 on the opening of the valve 83 supplied from the higher level controller SLC through the I/O bus 60 normally drives the control end 83 through a switch 80, an auto/manual switch 81 and a voltage/current converter 82. A control signal S41 or S42 at the control terminal 83 is compared with a position feedback signal S43 detected by a control end position detector 85, by an error diagnose circuit 84. A comparison output S44 and an input S45 from a control end full open/close limit switch SW 86 are processed by a logic circuit 87 and an output signal S46 therefrom is supplied to a manual operation station 88A which diplays the signal by a lamp. The station 88A also displays the auto/manual operation (A/M) and the opening signal S43 of the valve 83. When an increase or decrease button is depressed in the manual mode (M), the output of the station 88A increases or decreases. As the manual mode (M) is selected, the switch 81 selects the memory 92 through the auto/manual switching circuit 89. Numeral 90 denotes a switching logic which switches the control end 83 through a memory 92 and the auto/manual switch 81 by a manual switching control signal from the manual operation station 88A and a forced switching signal 212 from a protection circuit 61. Even if the higher level controller fails and the control command from the I/O bus 60 is no longer inputted, the control end can be switched by the manual operation and the function of the protection circuit, as a characteristic of the DCM. Another characteristic of the DCM is a backup circuit 93. In the case of the failure of the higher order controller SLC, a holder 94 holds a process feedback signal 211 supplied through the SGC as a set value, a comparator 95 compares it with the process feedback signal and a proportional integrator 96 and the switch 80 control a process feedback quantity to one immediately before the occurrence of the failure of the higher level controller.

By the functions of the SGC and the DCM, the manual operation is assured, the protection function is assured and the minimum process feedback control function is assured and a simplex configuration of the system is attained even when the higher level controller (sub-loop controller SLC) fails.

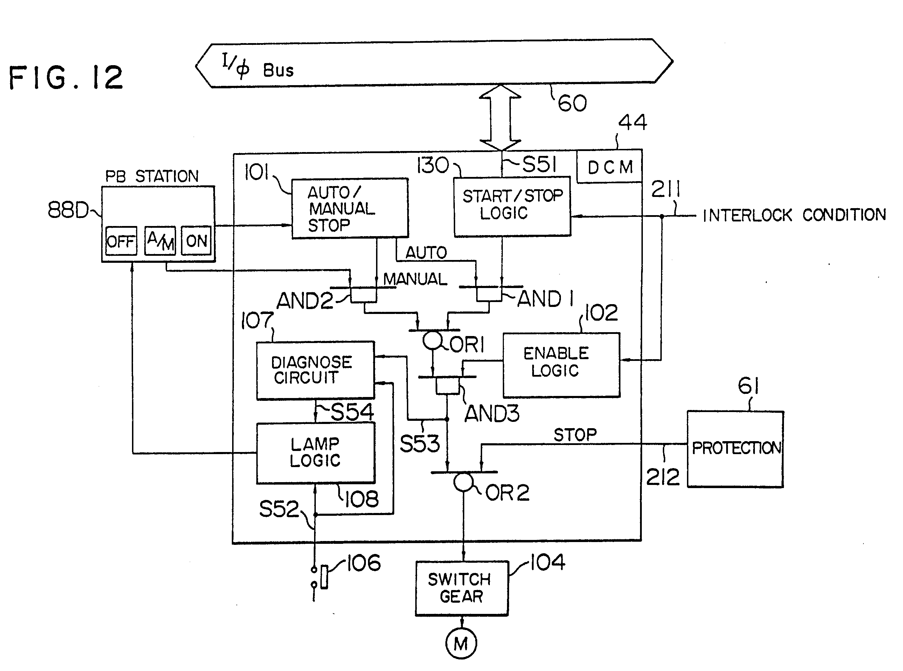

Fig. 12 shows a detail of the function of the digital controlling DCM. An auto start/stop command SS1 supplied from the higher level controller SLC from the I/O bus 60 is supplied to a start/stop logic 130 which checks if it needs an interlock condition supplied from the SGC through a signal line 211. In the auto-mode, an auto/manual switching circuit 101 activates a switch gear 104 through AND 1, OR 1, AND 3 and OR 2 in accordance with the output of the start/stop logic 130. When the manual mode is selected by the PB station 88D, the circuit 101 turns on or off the switch gear 104 through the AND 2, OR 1, AND 3 and OR 2 in accordance with the manual start/stop command. An enable logic 102 enables the AND 3 only when the interlock condition is met. It is emergency-stopped through the OR 2 by a command 212 from the protection circuit 61. A diagnose circuit 107 diagnoses an error in accordance with anticoincidance of a signal S52 from a contact 106 which is switched by the switch gear 104 and the command signal S53. The diagnose result S54 and the feedback signal S52 are displayed in a PB station 103 through a logic 108. In the digital control, the DCM can also assure the manual start/stop and the forced stop function by the protection logic even if the higher level controller (sub-loop controller) fails.

In the present configuration, when the higher level controller fails, the lower level controller partially back up the higher level controller so that the reliability of the system is improved. This autonomous control by the present invention is described below.

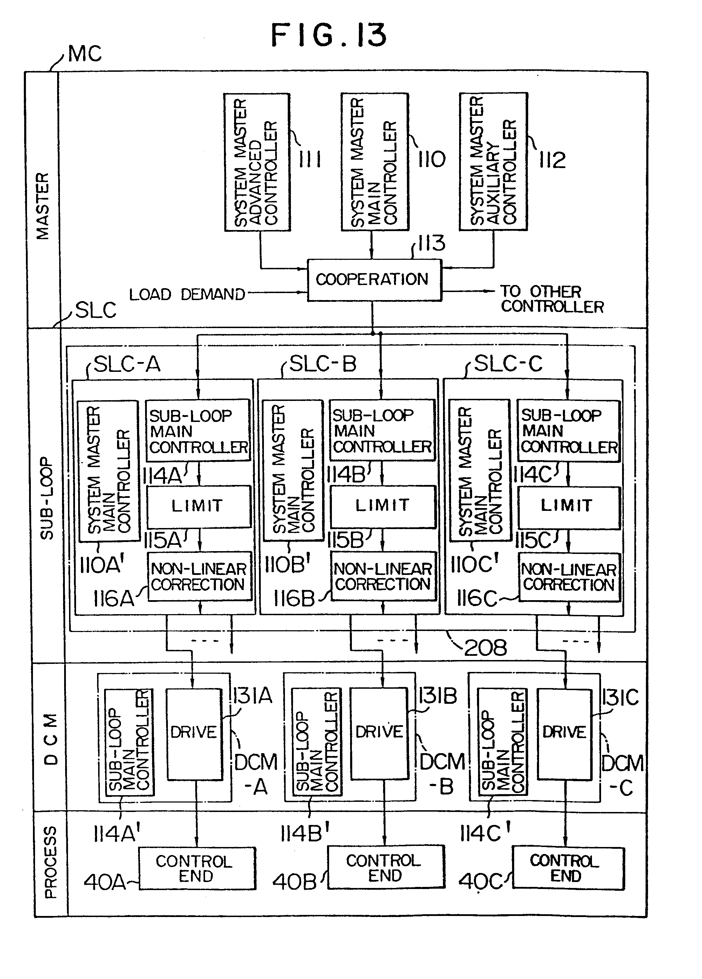

Fig. 13 shows a control function having the master controller MC, sub-loop controllers SLC's and DCM's. The MC has the following three functions. A system master main controller 110 is essential to cooperative control of the sub-loops. A system master advanced controller 111 improves the controlability of the sub-loops. A system master auxiliary controller 112 includes a limit circuit for the sub-loop control and a start/stop control circuit. The master controller MC prepares a command coodinated among the sub-loop controllers from the load demand and supplies it to the sub-loop controllers SLC-A, SLC-B and SLC-C.

The control function of each sub-loop controller SLC includes a sub-loop main controller 114 essential to the sub-loop controllers, a limit element 115 which is an additional controller, and a non-linear correction element 116.

In the present invention, the system is functionally divided as shown in Fig. 13. Each sub-loop controller SLC has a processor 110' similar to the system master main controller 110 of the higher level master controller MC and each drive control module DCM has a processor 114' similar to the sub-loop main processor 114 of the higher level sub-loop controller SLC. The processors 110' and 114' normally receive the same inputs to those to the controllers 110 and 114 and merely stand by.

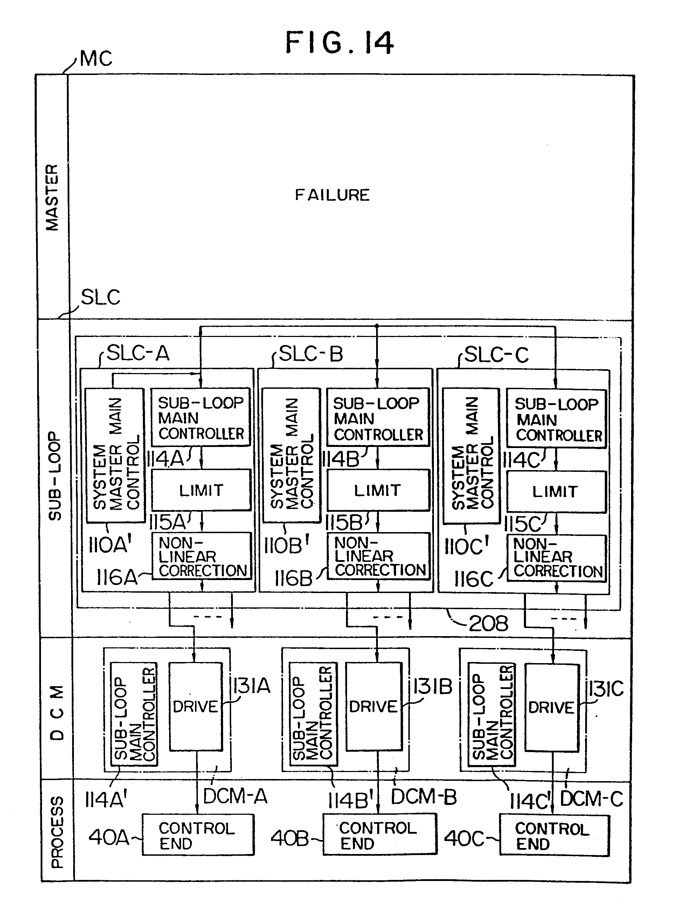

Fig. 14 shows the backup control with a reduced function by the sub-loop controller SLC when the master controller MC fails. Numeral 110'A denotes the same function as that of the system master main controller 110 of Fig. 13, provided in a sub-loop controller SLC-A. When the master controller MC fails, the sub-loop controller SLC-A carries out only the essential portions of the function of the controller 110 of the control function of the master controller MC by the controller 110' to take place of the master controller MC, and sends commands to the sub-loop controllers SLC-B and SLC-C to keep cooperation among the sub-loop controllers SLC-A to SLC-C. This is the back-up function with the reduced function by the sub-loop controller SLC when the master controller MC fails.

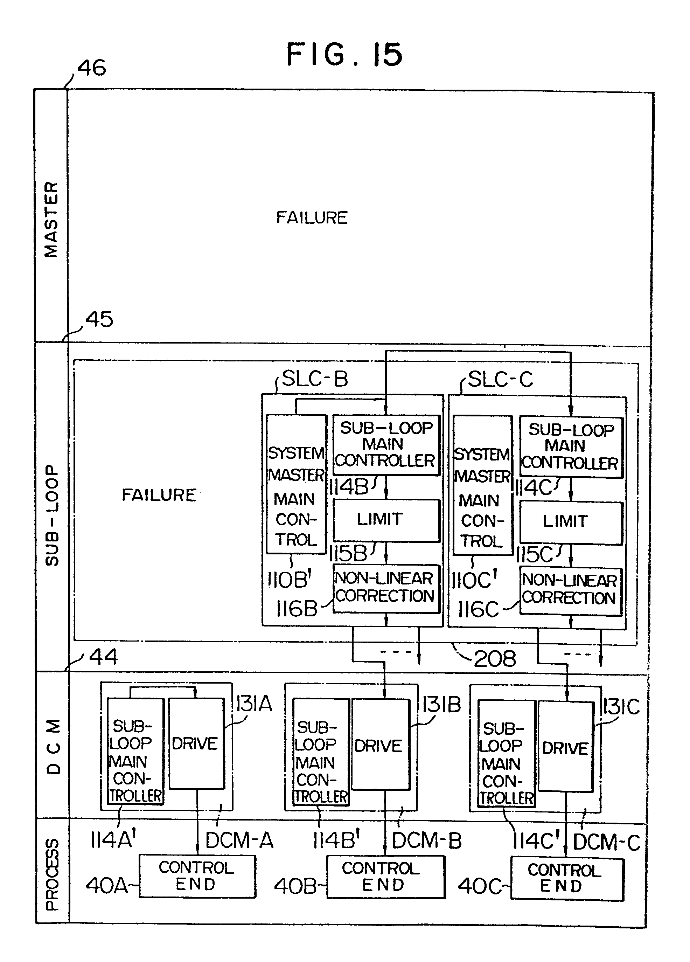

Fig. 15 shows a back-up function with a reduced function by the DCM when the sub-loop controller SLC also fails. Numeral 114' denotes the same function as the sub-loop main control function 114 in the sub-loop controller SLC, provided in the DCM. When the sub-loop controller SLC-A fails, the DCM can execute only the sub-loop main control function. A system master main controller 110B' in the sub-loop controller SLC-B sends commands to the sub-loop controller SLC-C to keep cooperation between the SLC-B and the SLC-C. This is the basic principle of the autonomous control of the high reliability simplex control system by the optimum hierachy distributed arrangement of the controllers in accordance with the plant characteristic and the back-up with the reduced function.

In Figs. 7A and 7B, the system master main controller and the system master auxiliary controller or the system master advanced controller use the following units.

### System master main controller:

B3, B4, B9, B10, B11, AD1, B8, B18, SB5, B19, SET3, SB6, B19, SET1, SB2, B14, B15, B12, SET4, SB7, B20, B13.

### System master auxiliary controller:

B5, B6, MP1, B7, AD2, SET2, SB4, B17, AD2.

### System master advanced controller:

B2.

Under the above designation, each SLC in the drum type boiler in Fig. 7A uses the following units as the system master main controller 110'.
- SLC 1;: B3, B4
- SLC 2 - 7;: B9, B10, AD1, SB1, B8
- SLC 8, 9;: B18, B19, SB5, SET3, SB6, B19
- SLC 10 - 12;: SET1, SB2, B14, B15
- SLC 13, 14;: B12
- SLC 15;: SET4, SB7, B20
In the one-through type boiler of Fig. 7B, each SLC uses the following units.
- SLC 1;: B3, B4
- SLC 10 - 12;: B9, B11, SB3, B16
- SLC 13, 14;: B12
- SLC 2 - 7;: B13, AD1, SB1, B8
- SLC 8, 9;: B18, SB5, B19, SET3, SB6, B19
- SLC 15;: SET4, SB7, B20
The function to be equipped in the sub-loop main controller 114' in the DCM may be the same as that of the feedback control or the function generator shown in the SLC of Figs. 7A and 7B, and the explanation thereof is omitted here.

When the master controller MC of Fig. 14 fails, the fuel flow rate demand 6' is necessary for the operation of the system master main controller 110' in the SLC's 8 and 9 of Fig. 7A. To this end, the signal 6' produced by the system master main controller 110' of the SLC's 2 - 7 is transferred. Similarly, the electric power demand 2 is required by the SLC's 2 - 7. To this end, the signal produced by the controller 110' in the SLC is transferred. In Fig. 7B, the necessary signals are also transferred from other SLC's. For example, when the master controller MC of Fig. 14 fails, the fuel flow rate demand 6 is necessary for the operation of the system master main controller 110' in the SLC's 8 and 9 in Fig. 7B. To this end, the signal 6 produced by the system master main controller 110' in the SLC's 2 - 7 is transferred. The feed water flow rate demand 3 is required by the SLC's 2 - 7. To this end, the signal 3 produced by the system master controller 110' is transferred. Similarly, the electric power demand 2 required by the SLC's 10 - 12 is transferred from the SLC 1.

The back-up function with the reduced function in accordance with the present invention is now explained in connection with the feed-water sub-process controller of the drum type boiler shown in Fig. 7A.

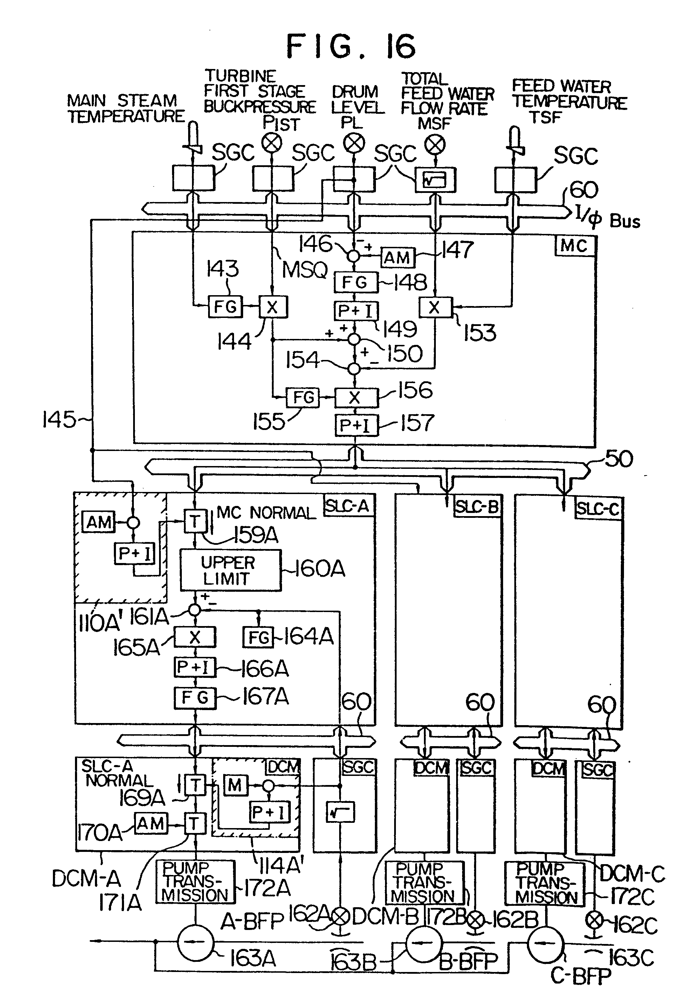

Fig. 16 shows a control in a feed water sub-process II 12 in a normal state. Detection signals relating to the feed water control from the master controller MC are supplied from the SGC's through the I/O bus 60. A turbine first stage back pressure P_{lST} is converted to a main steam flow rate MSQ by the function generator in the SGC. A main steam temperature MST is applied to a function generator 143 and an output thereof is supplied to a multiplier 144 to correct the main steam flow rate MSQ. A drum level DL is compared with a setting of a setter 147 by a comparator 146 and a difference therebetween is non-linear corrected by a functional generator 148, and an output therefrom is supplied to a proportional integrator 149. An output of the integrator 149 is supplied to an adder 150 which adds thereof to main steam flow rate MSQ to produce a total feed water flow rate demand. A total feed water flow rate MSF is multiplied by a feed water temperature TSF by a multiplier 153, and a product is compared with the demand by a comparator 154. A difference therebetween is corrected by the main steam flow rate MSQ by a function generator 155 and a multiplier 156, and an output of the multiplier 156 is supplied to a proportional integrator 157, and an output therefrom is used as a feed water flow rate demand for each microprocess. This demand is supplied to the feed water sub-loop controllers SLC-A, SLC-B and SLC-C through the serial data transfer loop 50. Numeral 110A' denotes the reduced backup function in the sub-loop controller SLC. The demand from the master controller MC is supplied to a controller 161A through a switch 159A and an upper limit circuit 160A, and compared with a flow rate feedback signal of a feed water pump 163A detected by 162A, and a difference therebetween is multiplied by an output of a function generator 164A by a multiplier 165A, and a product is supplied to a proportional integrator 166A. An output of the integrator 166A is non-linear corrected by a function generator 167A and an output therefrom is supplied to the DCM-A through the I/O bus 60 as a pump rotation speed command. Numeral 114A' denotes a reduced backup function in the DCM-A. The rotation speed command is supplied to a pump transmission 172A through switches 169A and 171A to control a speed.

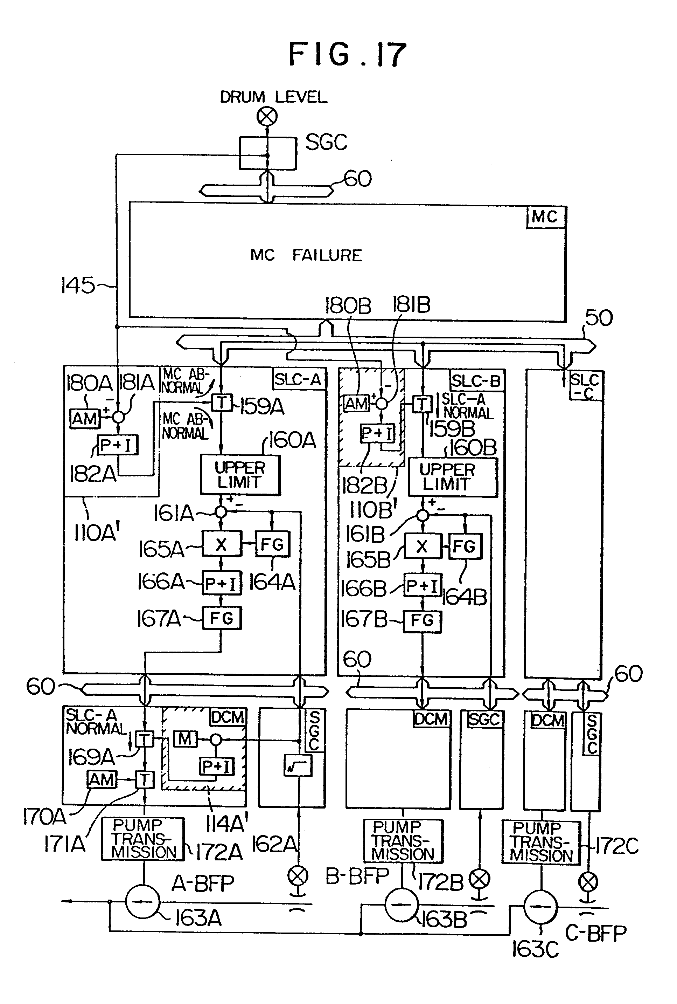

Fig. 17 shows an operation when the master controller MC fails. The reduced backup function 110A' of the feed water sub-loop controller SLC-A operates to supply the feed water demand to the sub-loop controller SLC-B in place of the master controller MC. The SLC-A receives the drum level signal 145 and a comparator 181A compares it with a setting 180A, and a difference therebetween is supplied to a proportional integrator 182A. An output therefrom is used as a feed water demand for the pumps. It is supplied to the SLC-A through the switch 159A as a feed water demand and also supplied to the feed water sub-loops SLC-B and SLC-C through the serial data transmission loop 50 as the feed water demand. In this manner, the feed water sub-loop SLC-A cooperates with the SLC-B and SLC-C to continue the control for the drum level.

The sub-loop controller SLC-A normally monitors the feed water demand from the master controller MC and operates the switch 159A when it detects the absence of the signal.

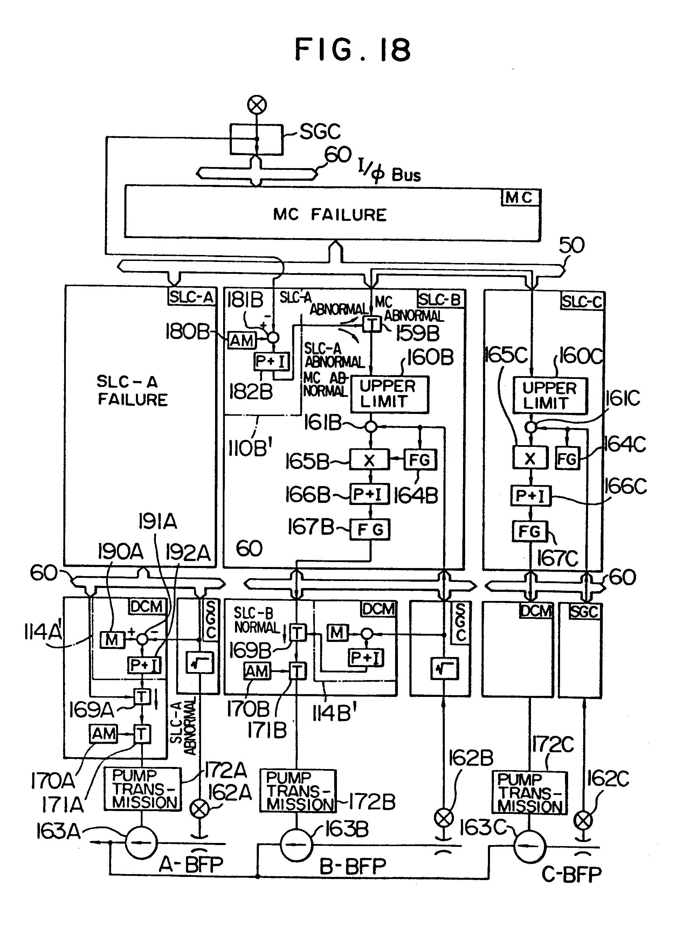

In Fig. 18, the master controller MC as well as the feed water sub-loop controller SLC-A fail. In this case, the control function of the master controller MC is taken over by the reduced backup function 110B' in the feed water sub-loop controller SLC-B, and the demand is supplied to the feed water sub-loop controller SLC-C through the serial data transmission loop 50 so that the drum level control is attained in coordination with the SLC-B and SLC-C.

The DCM-A in the feed water sub-loop controller SLC-A can achieve the feedback control of the pump flow rate by the reduced backup function 114A' in the PCM-A. The pump flow rate signal from the detector 162A, supplied from the SGC to the DCM-A is compared with a setting 190A by a comparator 191A, and a difference therebetween is supplied to a proportional integrator 192A, which produces a pump speed command, which in turn is supplied to a pump transmission 172A through a switch 169A to control the speed.

The DCM normally monitors the feed water flow rate signal to the feed water microprocess supplied from the sub-loop controller SLC and operates the switch 169A when it detects the absence of the signal, as the sub-controller does.

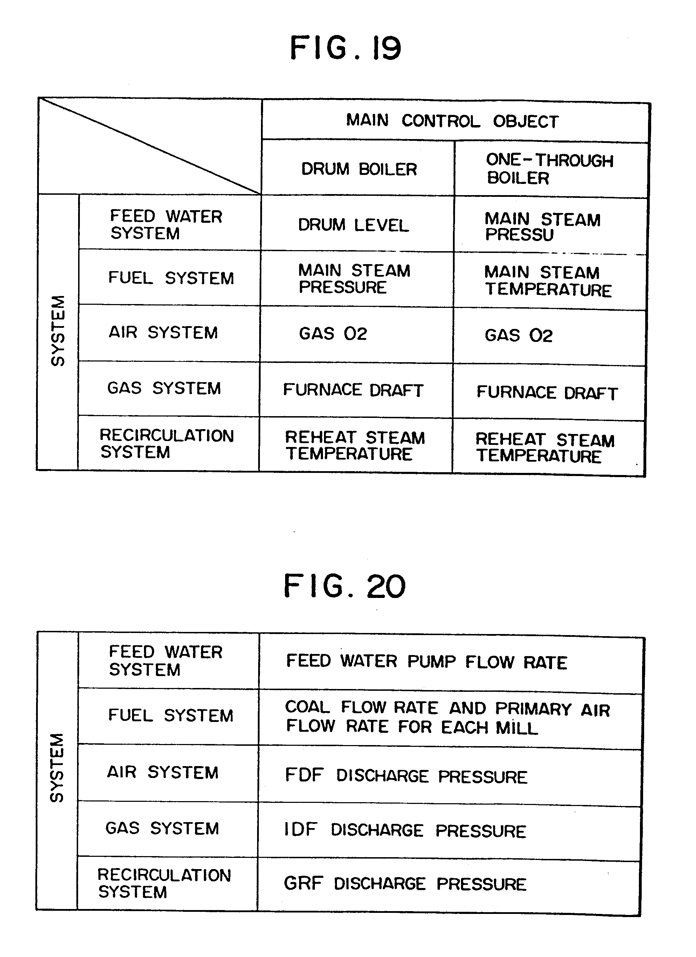

Fig. 19 shows process input signals required for the sub-loop controllers SLC of the respective systems to partially back up the control function of the higher level master controller MC when the MC fails. Those process signals are used as control signals to construct the system master main control circuit in the sub-loop controller SLC. As a result, the SLC can follow a slow load change of 3%/min although it cannot follow a fast load change which can be followed by the master controller MC when it is normal. For example, in the drum type boiler, the drum level in the feed water system, the main steam pressure in the fuel system, the gas O₂ in the air system, the furnace draft in the gas system and the reheat steam pressure in the recirculation system are the process signals.

When the sub-loop controller SLC fails, the cascade control by the demand by the sub-loop controller is not attained but the DCM reads in the process signals at the control ends controlled by the DCM and uses those process signals as the control signal to construct the sub-loop main control circuit in the DCM to allow the fixed value feedback control by the setting in the DCM in order to absorb minor process disturbance at each control end. Fig. 20 shows an example of process signals read into the DCM when the SLC fails.

The feed water pump flow rate in the feed water sub-loop, the coal flow rate and the primary air flow rate for each mill in the fuel sub-loop and fan discharge pressures in the air, gas and recirculation sub-loop are the process signals to achieve the above object.

The sub-loop controller SLC is assigned one for each group of the same type of control ends for each system. (For example, 3 groups in the feed water system, 6 groups in the fuel system and 2 groups in the air system.) Accordingly, if one SLC fails and the control ends controlled by the associated lower level DCM are controlled by the fixed value feedback control by the setting in the DCM, the control ends controlled by the remaining normal SLC's can be cascade-controlled and the SLC's can follow certain load change.

As described hereinabove, according to the present invention, the hierachy distributed simplex system power plant can continue the operation even if the controller fails, and an economical and reliable control system is provided.

## Claims

1. A controller for a heat power plant, comprising
a master controller (MC) for receiving a load demand and a plurality of plant data from the heat power plant and for producing command signals for commanding parameters for the plant to achieve the load demand;
a plurality of sub-loop controllers (SLC) each being independently provided for each of said command signals for producing in accordance with the command signals control quantity signals supplied to control ends (40),
a plurality of plant data detection means for detecting the plant data and delivering the plant data to said master controller (MC) or said sub-loop controllers (SLC),
characterized in
that a drive means (DCM) is provided for each of said control quantity signals to control said control ends (40);
that said master controller (MC) and each of said sub-loop controllers (SLC) include corresponding functional means (110; 110') having a system master main control function required to determine said command signals;
that said functional means (110') provided in a sub-loop controller (SLC) issues command signals to the related sub-loop controller (SLC) on the basis of said plant data to maintain automatic operation of the power plant when the master controller (MC) fails, to coordinate the sub-loop controllers (SLC) and to supply the control quantity signals to said drive means (DCM);
that a sub-loop controller (SLC) and an associated drive means (DCM) include corresponding functional means (114, 114') having the function of issuing a control quantity signal for the drive means (DCM); and
that said functional means (114') provided in the drive means (DCM) generates said control quantity signal when said sub-loop controller (SLC) fails.

2. A controller according to claim 1, characterized in that said functional means (110) in said system master main controller (MC) issues an electric power command to said sub-loop controller and includes functional means for controlling a frequency.

3. A controller according to claim 1 or 2, characterized in that said functional means (110) in said system master main controller (MC) issues a feed water feed rate command to said sub-loop controller (SLC) in a drum type boiler and includes functional means for controlling the boiler drum level.

4. A controller according to claim 1 or 2, characterized in that said functional means (110) in said system master main controller (MC) issues a feed water feed rate command to said sub-loop controller (SLC) in a one-through type boiler and includes functional means for controlling the main steam pressure.

5. A controller according to any one of claims 1 to 3, characterized in that said functional means (110) in said system master main controller (MC) issues a fuel flow rate command to the sub-loop controller (SLC) in a drum type boiler and includes functional means for controlling the main steam pressure.

6. A controller according to claim 1, 2 or 4, characterized in that said functional means (110) in said system master main controller (MC) issues a fuel flow rate command to the sub-loop controller (SLC) in a one-through type boiler and includes functional means for controlling the main steam temperature.

7. A controller according to any one of claims 1 to 6, characterized in that said functional means (110) in said system master main controller (MC) issues an air flow rate command to said sub-loop controller (SLC) and includes functional means for controlling the boiler gas oxygen concentration.

8. A controller according to any one of claims 1 to 7, characterized in that said functional means (110) in said system master main controller (MC) issues a recirculation gas flow rate command to said sub-loop controller (SLC) and includes functional means for controlling the boiler reheat steam temperature.

## Patentansprüche

1. Regler für ein Wärmekraftwerk, umfassend
einen Hauptregler (MC), der von dem Wärmekraftwerk eine Lastanforderung und mehrere Kraftwerksdaten empfängt und Befehlssignale zur Vorgabe von Parametern für das Kraftwerk zur Erzielung der Lastanforderung erzeugt,
mehrere Unterschleifenregler (SLC), die unabhängig voneinander jeweils für die einzelnen Befehlssignale vorgesehen sind, um diesen entsprechend Führungsgrößensignale zu erzeugen, die an Steuereinheiten (40) liegen, und
mehreren Kraftwerksdaten-Erfassungseinrichtungen zur Erfassung der Kraftwerksdaten und deren Zuführung an den Hauptregler (MC) und die Unterschleifenregler (SLC),
dadurch gekennzeichnet,
daß für jedes der Führungsgrößensignale ein Stellglied (DCM) zur Steuerung der Steuereinheiten (40) vorgesehen ist,
daß der Hauptregler (MC) und jeder der Unterschleifenregler (SLC) entsprechende Funktionseinrichtungen (110; 110') mit einer zur Bestimmung der Befehlssignale erforderlichen Systemhauptsteuerfunktion enthält,
daß die in einem Unterschleifenregler (SLC) vorhandene Funktionseinrichtung (110') aufgrund der Kraftwerksdaten Befehlssignale an den zugehörigen Unterschleifenregler (SLC) ausgibt, um bei Ausfall des Hauptreglers (MC) einen automatischen Betrieb des Kraftwerks aufrechtzuerhalten, die Unterschleifenregler (SLC) zu koordinieren und die Führungsgrößensignale den Stellgliedern (DCM) zuzuführen,
daß ein Unterschleifenregler (SLC) und ein zugehöriges Stellglied (DCM) entsprechende Funktionseinrichtungen (114, 114') enthalten, die die Funktion haben, ein Führungsgrößensignal für das Stellglied (DCM) auszugeben, und
daß die in dem Stellglied (DCM) vorhandene Funktionseinrichtung (114') das Führungsgrößensignal erzeugt, wenn der Unterschleifenregler (SLC) ausfällt.

2. Regler nach Anspruch 1, dadurch gekennzeichnet, daß die Funktionseinrichtung (110) in dem Systemhauptregler (MC) einen Befehl für elektrische Leistung an den Unterschleifenregler ausgibt und eine Funktionseinrichtung zur Steuerung einer Frequenz enthält.

3. Regler nach Anspruch 1 oder 2, dadurch gekennzeichnet, daß die Funktionseinrichtung (110) in dem Systemhauptregler (MC) einen Befehl für Speisewasserdurchsatz an den Unterschleifenregler (SLC) in einem Trommel-Heizkessel ausgibt und eine Funktionseinrichtung zur Steuerung des Heizkesselpegels enthält.

4. Regler nach Anspruch 1 oder 2, dadurch gekennzeichnet, daß die Funktionseinrichtung (110) in dem Systemhauptregler (MC) einen Befehl für Speisewasserdurchsatz an den Unterschleifenregler (SLC) in einem Durchlaufheizkessel ausgibt und eine Funktionseinrichtung zur Steuerung des Hauptdampfdruckes enthält.

5. Regler nach einem der Ansprüche 1 bis 3, dadurch gekennzeichnet, daß die Funktionseinrichtung (110) in dem Systemhauptregler (MC) einen Befehl für Kraftstoffdurchsatz an den Unterschleifenregler (SLC) in einem Trommel-Heizkessel ausgibt und eine Funktionseinrichtung zur Steuerung des Hauptdampfdruckes enthält.

6. Regler nach Anspruch 1, 2 oder 4, dadurch gekennzeichnet, daß die Funktionseinrichtung (110) in dem Systemhauptregler (MC) einen Befehl für Kraftstoffdurchsatz an den Unterschleifenregler (SLC) in einem Durchlaufheizkessel ausgibt und eine Funktionseinrichtung zur Steuerung der Hauptdampftemperatur enthält.

7. Regler nach einem der Ansprüche 1 bis 6, dadurch gekennzeichnet, daß die Funktionseinrichtung (110) in dem Systemhauptregler (MC) einen Befehl für Luftdurchsatz an den Unterschleifenregler (SLC) ausgibt und eine Funktionseinrichtung zur Steuerung der Sauerstoffkonzentration in dem Heizkesselgas enthält.

8. Regler nach einem der Ansprüche 1 bis 7, dadurch gekennzeichnet, daß die Funktionseinrichtung (110) in dem Systemhauptregler (MC) einen Befehl für Gas-Umlaufdurchsatz an den Unterschleifenregler (SLC) ausgibt und eine Funktionseinrichtung zur Steuerung der Temperatur des Heizkessel-Nachverbrennungsdampfes enthält.

## Revendications

1. Dispositif de commande pour une centrale thermoélectrique, comprenant
un dispositif de commande maître (MC) servant à recevoir une demande de charge et une pluralité de données de la centrale provenant de la centrale thermoélectrique et produire des signaux de commande pour commander des paramètres pour la centrale de manière à obtenir la demande de charge;
une pluralité de dispositifs de commande de boucle secondaire (SLC), dont chacun est prévu de façon indépendante pour chacun desdits signaux de commande pour produire, en fonction des signaux de commande, des signaux de quantité de commande envoyés à des extrémités de commande (40),
une pluralité de moyens de détection de données de la centrale pour détecter les données de la centrale et envoyer les données de la centrale audit dispositif de commande maître (MC) ou auxdits dispositifs de commande de boucle secondaire (SLC),
caractérisé en ce
qu'il est prévu des moyens de commande (DCM) pour chacun desdits signaux de quantité de commande pour commander lesdites extrémités de commande (40),
que ledit dispositif de commande maître (MC) et chacun desdits dispositifs de commande de boucle secondaire (SLC) comprennent des moyens fonctionnels correspondants (110; 110') ayant une fonction de commande principale maître du système nécessaire pour déterminer lesdits signaux de commande;
que lesdits moyens fonctionnels (110') prévus dans un dispositif de commande de boucle secondaire (SLC) envoient des signaux de commande au dispositif de commande de boucle secondaire associé (SLC) sur la base desdites données de la centrale pour maintenir le fonctionnement automatique de la centrale thermoélectrique lorsque le dispositif de commande maître (MC) tombe en panne, pour coordonner les dispositifs de commande de boucle secondaire (SLC) et envoyer les signaux de quantité de commande auxdits moyens de commande (DCM);
qu'un dispositif de commande de boucle secondaire (SLC) et des moyens de commande associés (DCM) incluent des moyens fonctionnels correspondants (114, 114') ayant pour objet d'envoyer un signal de quantité de commande pour les moyens de commande (DCM); et
que lesdits moyens fonctionnels (114') prévus dans les moyens de commande (DCM) produisent ledit signal de quantité de commande lorsque ledit dispositif de commande de boucle secondaire (SLC) tombe en panne.

2. Dispositif de commande selon la revendication 1, caractérisé en ce que lesdits moyens fonctionnels (110) situés dans ledit dispositif de commande principal maître (MC) du système envoient une commande d'énergie électrique audit dispositif de commande de boucle secondaire et comprennent des moyens fonctionnels pour commander une fréquence.

3. Dispositif de commande selon la revendication 1 ou 2, caractérisé en ce que lesdits moyens fonctionnels (110) situés dans ledit dispositif de commande principal maître (MC) du système envoient un ordre de débit d'eau d'alimentation audit dispositif de commande de boucle secondaire (SLC) dans une chaudière du type à virole et comprennent des moyens fonctionnels pour commander le niveau dans la virole de la chaudière.

4. Dispositif de commande selon la revendication 1 ou 2, caractérisé en ce que lesdits moyens fonctionnels (110) situés dans ledit dispositif de commande principal maître (MC) du système envoient un ordre de débit d'eau d'alimentation audit dispositif de commande de boucle secondaire (SLC) dans une chaudière du type à traversée et comprennent des moyens fonctionnels pour commander la pression de vapeur principale.

5. Dispositif de commande selon l'une quelconque des revendications 1 à 3, caractérisé en ce que lesdits moyens fonctionnels (110) situés dans ledit dispositif de commande principal maître (MC) du système envoient une commande de débit de combustible au dispositif de commande de boucle secondaire (SLC) dans une chaudière du type à virole et comprennent des moyens fonctionnels pour commander la pression de vapeur principale.

6. Dispositif de commande selon la revendication 1, 2 ou 4, caractérisé en ce que lesdits moyens fonctionnels (110) situés dans ledit système de commande principal maître (MC) du système envoient un ordre de débit de combustible au dispositif de commande de boucle secondaire (SLC) dans une chaudière du type à traversée et comprennent des moyens fonctionnels pour commander la température de vapeur principale.

7. Dispositif de commande selon l'une quelconque des revendications 1 à 6, caractérisé en ce que lesdits moyens fonctionnels (110) situés dans ledit dispositif de commande principale maître (MC) du système envoient un ordre de débit d'air audit dispositif de commande de boucle secondaire (SLC) et comprennent des moyens fonctionnels pour commander la concentration en oxygène dans le gaz de la chaudière.

8. Dispositif de commande selon l'une quelconque des revendications 1 à 7, caractérisé en ce que lesdits moyens fonctionnels (110) situés dans ledit dispositif de commande principal maître (MC) du système envoient un ordre de débit de gaz de recirculation audit dispositif de commande de boucle secondaire (SLC) et comprennent des moyens fonctionnels pour commander la température de vapeur de réchauffage de la chaudière.
